# FASCICULE DE BREVET EUROPEEN

(11) **EP 2 697 952 B1**
(45) Date de publication et mention de la délivrance du brevet: **08.03.2017**
(21) Numéro de dépôt: 12713965.7
(22) Date de dépôt: 05.04.2012
(51) Int. Cl.: G06Q 20/38, G06Q 20/40, H04L 12/24, H04L 29/08

(54) **PROCEDE DE MULTIPLEXAGE DE MESSAGES, DISPOSITIF ET PROGRAMME CORRESPONDANT**
NACHRICHTENMULTIPLEXVERFAHREN, VORRICHTUNG UND ZUGEHÖRIGES PROGRAMM
MESSAGE MULTIPLEXING METHOD, DEVICE AND CORRESPONDING PROGRAM

(30) Priorité: 13.04.2011 FR 1101142
(43) Date de publication de la demande: 19.02.2014
(73) Titulaire: Ingenico Group, 75015 Paris (FR)
(72) Inventeur: POLIGNY, Jean-Roch, F-26500 Bourg-les-valence (FR); GOMES, Vincent, F-26000 Valence (FR); JAMES, Sébastien, F-26000 Valence (FR); ROYER, Jessica, F-26000 Valence (FR); POMMARET, Jean-Christophe, F-26600 Tain-l'Hermitage (FR); GRANDEMENGE, Jérôme, F-92700 Colombes (FR)
(74) Mandataire: Vidon Brevets & Stratégie
(86) Numéro de dépôt international: PCT/EP2012/056317
(87) Numéro de publication internationale: WO 2012/139976

(56) Documents cités:
- KR-A- 20030 064 329
- US-A1- 2004 042 450
- US-A1- 2008 114 699
- US-A1- 2009 222 659
- US-B1- 6 728 210
- Adrian Game: "iPod Accessory Serial Protocol", Hardware , 13 septembre 2009 (2009-09-13), pages 1-7, XP002661151, Extrait de l'Internet: URL:http://www.adriangame.co.uk/ipod-acc-p ro.html [extrait le 2011-10-13]

## Description

### Domaine de l'invention

La présente invention se rapporte au domaine des dispositifs de paiement électroniques. Plus particulièrement, la présente invention se rapporte à un nouveau type de dispositif de paiement électronique qui peut être appairé. L'invention se rapporte encore plus particulièrement à la transmission de données entre deux terminaux composant le dispositif de paiement électronique.

### Solutions de l'art antérieur

A l'heure actuelle, les terminaux de paiement sont majoritairement utilisés pour permettre le règlement des achats de biens et de services au sein des points de vente. Ces terminaux comprennent généralement un lecteur de carte à puce et un lecteur de carte magnétique. Ils comprennent également un écran, permettant notamment de visualiser des informations, telles que les montants des transactions, et un clavier de saisie de ces mêmes montants ainsi que des codes confidentiels saisis par les clients, ou bien un écran tactile.

Les terminaux les plus récents sont connectés à des caisses enregistreuses et/ou à des ordinateurs par l'intermédiaire d'un réseau de communication. De telles connexions peuvent être filaires, par exemple de type Ethernet, ou sans fil. Ces connexions permettent par exemple de se connecter à un serveur d'authentification ou à un serveur bancaire en vue de l'obtention d'une autorisation de débit.

Pour pouvoir communiquer avec l'extérieur, et notamment avec des serveurs bancaires, le terminal de paiement utilise un ou plusieurs moyens de connexion. L'un de ces moyens consiste à utiliser un réseau de communication sans fil, par exemple GPRS (de l'anglais « General Packet Radio Service »). Dans ce cas, le terminal de paiement agit de manière autonome. Le terminal de paiement est alors muni d'une carte SIM (de l'anglais « Subscriber Identity Dispositif de multiplexage »). Il s'agit d'une puce contenant un microcontrôleur et de la mémoire. Cette carte SIM est généralement associée à un abonnement téléphonique (de type transmission de données) qui doit être souscrit par le commerçant. Outre le fait que ce type d'abonnement est relativement onéreux, la mise en oeuvre des fonctionnalités de communication est attribuée au terminal. Ainsi, en plus des fonctions de paiement, le terminal doit gérer des fonctions de communication, qui ne sont pas naturellement les fonctions que l'on attend d'un terminal de paiement.

Pour pallier le problème de coût de l'abonnement associé à la communication GPRS notamment, de nouveaux types de terminaux communiquent par l'intermédiaire d'un réseau de type « WiFi » (de l'anglais pour « Wireless Fidelity ») par exemple. Le commerçant n'est alors plus obligé de souscrire un abonnement particulier. Le terminal de paiement peut se connecter au réseau WiFi du commerçant et accéder, comme dans une connexion filaire, aux serveurs bancaires. Cependant, l'usage du terminal est alors limité à la zone de couverture du réseau WiFi, ce qui ne convient pas à une utilisation nomade (par exemple pour un médecin en visite chez ses patients ou pour un chauffeur de taxi).

L'état de la technique antérieure est connue de par les documents US2004/0042450 A1 et US2008/0114699 A1.

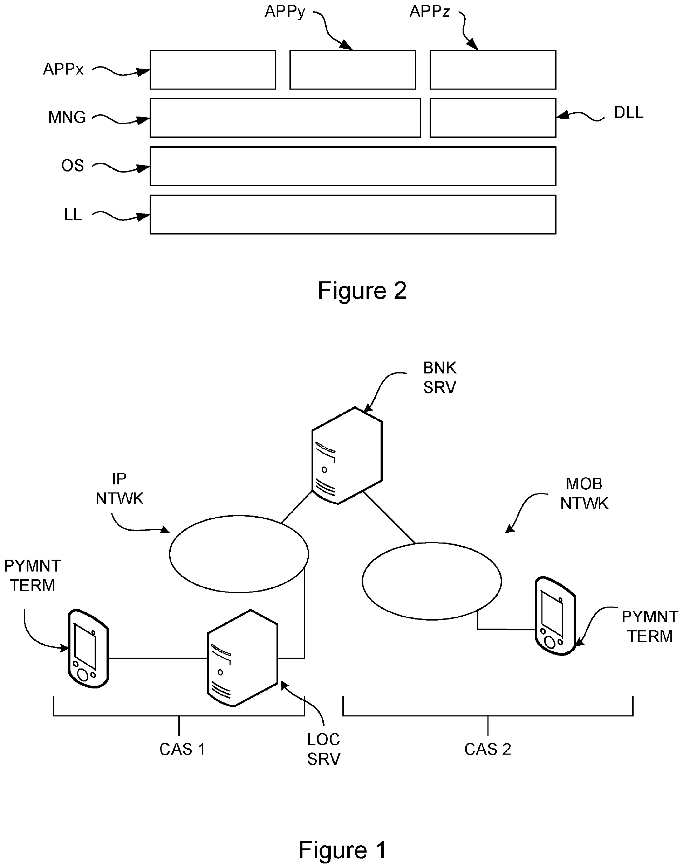

On présente, en relation avec la figure 1, l'architecture matérielle générale dans laquelle le terminal de paiement intervient pour pouvoir réaliser une transaction bancaire, lorsque ce terminal n'est pas autonome (CAS 1) et lorsqu'il est autonome (CAS 2)

Ainsi, il existe un besoin pour proposer un terminal de paiement qui puisse être utilisé pour des applications nomades, donc en utilisant un réseau de communication sans fil, tout en minimisant les coûts de mise en oeuvre d'un tel terminal de paiement. Pour ce faire, on propose ainsi d'appairer le terminal de paiement avec un terminal de communication existant (par exemple un iPhone™ ou un iPod™), pour former un terminal appairé. Le terminal appairé comprend naturellement de nombreuses fonctionnalités qui sont absentes du terminal de paiement lorsqu'il n'est pas appairé.

Le problème est que tout nouveau terminal de paiement doit subir une série de tests de certification. Ces tests de certification sont appelés tests « PCI/PED ». Ils sont extrêmement onéreux. Ainsi, les constructeurs de terminaux de paiement veillent à effectuer ces tests à bon escient.

Ainsi, il existe donc un besoin de proposer un terminal de paiement qui soit à la fois appariable avec un terminal de communication pour former un terminal appairé, sans qu'il soit nécessaire de mettre en oeuvre de nouveaux tests de certification à chaque fois que l'on souhaite appairer une nouvelle version ou un nouveau type de terminal de communication (par exemple un nouvel iPhone™ ou un nouvel iPod™).

### Résumé de l'invention

L'invention ne présente pas ces inconvénients de l'art antérieur.

L'invention est définie dans les revendications indépendantes 1, 6, et 7.

L'invention concerne plus particulièrement un procédé de multiplexage de message échangés entre un terminal de paiement et un terminal de communication par l'intermédiaire d'une connexion entre ledit terminal de paiement et ledit terminal de communication utilisant le protocole *iAP.* Selon l'invention un tel procédé comprend :
- une étape d'initialisation d'une interface de communication externe avec ledit terminal de communication ;
- une première étape de transmission, par ledit terminal de paiement, audit terminal de communication, d'une requête de création de canaux virtuels distants, par l'intermédiaire de ladite interface de communication externe ;
- une étape de création, au sein dudit terminal de paiement, des canaux virtuels locaux correspondant auxdits canaux virtuels distants ;
- une deuxième étape de transmission de trames de données associées auxdits canaux virtuels locaux par l'intermédiaire de ladite interface de communication externe.

Ainsi, l'invention permet de réaliser une transmission de données par l'intermédiaire de canaux multiples en utilisant une interface de communication série.

Selon une caractéristique particulière ladite interface de communication externe est une interface RS232.

Selon un mode de réalisation particulier, ledit procédé comprend en outre, préalablement à ladite étape d'initialisation d'interface de communication comprend une étape d'authentification dudit terminal de paiement vis-à-vis dudit terminal de communication comprenant :
- une étape d'obtention d'un certificat d'authentification ; et
- une étape de vérification, de l'autorisation du terminal de paiement à être appairé avec ledit terminal de communication à l'aide dudit certificat d'authentification.

Selon un mode de réalisation particulier, ladite deuxième étape de transmission de trames de données associées auxdits canaux virtuels locaux comprend :
- une étape de vérification, au sein desdits canaux virtuels, d'une présence d'une trame TLV destiné au terminal de communication ;
et lorsque l'un des canaux comprend une telle trame :
- une étape d'encapsulation de cette trame TLV dans un message *iAP.*

Selon une caractéristique particulière, lesdits canaux virtuels appartiennent au groupe comprenant :
- un canal virtuel « transaction » d'échange de données relatives aux transactions bancaires ;
- un canal virtuel « configuration » d'échange d'informations de service ;
- un canal virtuel « SSL », de chiffrement de transmission de données entre ledit terminal de paiement et ledit terminal de communication ;
- un canal virtuel « Printer » de transmission de données d'impression ;
- un canal virtuel « Barrcode » de gestion de la lecture des codes à barre.

Selon une caractéristique particulière, qu'un canal virtuel est créé sous la forme d'une file d'attente, ladite file d'attente étant configurée pour permettre la réception, l'enregistrement et l'effacement de trames TLV destinées audit canal virtuel.

Selon un autre aspect, l'invention concerne également un dispositif de multiplexage de message échangés entre un terminal de paiement et un terminal de communication par l'intermédiaire d'une connexion entre ledit terminal de paiement et ledit terminal de communication utilisant le protocole *iAP.*

Selon l'invention, un tel dispositif comprend :
- des moyens d'initialisation d'une interface de communication externe avec ledit terminal de communication ;
- des moyens de transmission, par ledit terminal de paiement, audit terminal de communication, d'une requête de création de canaux virtuels distants, par l'intermédiaire de ladite interface de communication externe ;
- des moyens de création, au sein dudit terminal de paiement, des canaux virtuels locaux correspondant auxdits canaux virtuels distants ;
- des moyens de transmission de trames de données associées auxdits canaux virtuels locaux par l'intermédiaire de ladite interface de communication externe.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un terminal de paiement selon l'invention et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous. Un tel composant logiciel est exécuté par un processeur de données d'une entité physique (terminal de paiement) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

### Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1, déjà présentée, illustre l'architecture matérielle d'un système de paiement dans lequel un terminal de paiement intervient ;
- la figure 2 un diagramme de bloc décrivant les couches logicielles mises en oeuvre au sein d'un terminal de paiement ;
- la figure 3 décrit le procédé de multiplexage selon un mode de réalisation ;
- la figure 4 décrit le format d'une message iAP ;
- la figure 5 présente les files d'attente correspondant aux canaux virtuels créés lors de la mise en oeuvre du multiplexage ;
- la figure 6 décrit sommairement l'architecture matérielle du dispositif de multiplexage.

### Description détaillée de l'invention

### 1.1 Rappel du principe de l'invention

L'invention poursuit l'objectif de réutiliser un terminal de paiement existant pour s'appairer avec un terminal de communication (par exemple un iPod™ ou iPhone™), sans qu'il soit nécessaire de certifier (au sens des certifications PCI/PED) l'ensemble constitué du terminal de communication et du terminal de paiement.

Pour ce faire, l'invention propose de mettre en oeuvre un dispositif de multiplexage qui réalise un multiplexage bidirectionnel de messages échangés entre le terminal de paiement et le terminal de communication. L'architecture logicielle proposée permet de réutiliser les applications existantes, déjà agréées pour des solutions fonctionnant lorsque le terminal de communication et le terminal de paiement s'échange des données en IP (également appelé « stack IP »), avec des produits mobiles ne supportant pas l'utilisation de « stack ip » en direct (type iPhone™)

Plus particulièrement, le multiplexage est mis en oeuvre par l'intermédiaire du protocole *iAP,* lequel est à l'origine du problème auquel l'invention permet d'apporter une solution (goulot d'étranglement formé par l'*iAP*). Ainsi, le terminal de paiement est vu comme un accessoire du terminal de communication. De fait, le terminal de communication, qui comprend de nombreuses fonctionnalités qui ne peuvent être présentes dans le terminal de paiement peut avantageusement compléter le fonctionnement de ce dernier.

Le dispositif de multiplexage met en oeuvre une succession d'étapes aboutissant à la transmission et/ou à la réception, par le terminal de paiement, de données pour et en provenance du terminal de communication. Selon un mode de réalisation particulier, le procédé de multiplexage de message par l'intermédiaire d'une connexion utilisant le protocole *iAP* comprend : L' « iPod Accessory Protocol/iAP » (également connu sous le nom Apple Accessory Protocol/AAP) est utilisé pour la communication entre iPod™ / iPhone™ et des accessoires tels que des stations d'accueil et adaptateurs pour voiture. L'IAP est principalement utilisé pour contrôler la lecture de l'iPod/iPhone et pour transférer des données telles que les métadonnées sur la piste en cours de lecture et des pochettes d'album. Avec les versions récentes de l'*iAP,* il est également possible pour les accessoires de communiquer avec les applications fonctionnant sur l'iPhone OS.

Cependant, l'*iAP* et sa mise en oeuvre sur les terminaux d'Apple souffrent d'un problème majeur : le débit. En effet, l'*iAP* a un débit réduit qui va de 19200 à 57600 bauds environ, en fonction des versions utilisées et des données à transmettre. En effet, la communication entre les terminaux et les accessoires est effectuée à l'aide d'une interface RS232 (une interface série) que l'*iAP* utilise.

Or cette interface n'est pas adaptée à la transmission de données entre un terminal de paiement et un terminal de communication. Cette transmission de données doit plutôt être réalisée par l'intermédiaire d'une interface USB. Cette interface USB permet de transmettre, à grande vitesse, des volumes de données importants. Plus particulièrement, le terminal de communication et le terminal de paiement sont connectés l'un à l'autre par l'intermédiaire d'une interface USB et la transmission de données est effectuée en réalisant une émulation d'une liaison série en mettant en oeuvre le protocole PPP (« Point-to-Point Protocol »), lui-même mettant en oeuvre le protocole IP (« Internet Protocol »), qui permet au terminal de paiement et au terminal de communication de disposer chacun d'une adresse IP. Les données de longueur variables sont quant à elles transmises selon la technique dite de « TLV » (« Type-length-value »).

En d'autres termes, la liaison USB entre les deux terminaux est certes plus rapide, mais de nombreuses encapsulations de données sont réalisées. Il en résulte une perte d'efficacité de la liaison USB assez importante : les multiples encapsulations (IP, PPP, USB) ne permettent pas d'utiliser les mêmes techniques pour une transmission par l'intermédiaire d'une interface RS232.

De plus, pour pouvoir communiquer avec les terminaux d'Apple il est nécessaire de mettre en oeuvre des « lingos ». Le protocole *iAP* définit quatre « lingo » (qui sont des canaux d'échange de données entre le terminal de communication d'Apple™ (iPhone™, iPod™, etc.) et l'accessoire (station d'accueil, casque, etc.) connecté au terminal de communication. Les quatres « lingo » sont les suivantes : General Lingo (générique), Display Remote Lingo (transfert d'affichage), Extended Interface Lingo (interface étendue), Digital Audio Lingo (transmission de données audio). Il n'est pas possible d'utiliser d'autres moyens de communication avec le terminal de communication. Les inventeurs ont donc du mettre en oeuvre une technique pour permettre une transmission de données adaptée au terminal de paiement. En effet, les moyens de transmission (« lingos ») offerts par le terminal de communication utilisant le protocole *iAP* ne sont manifestement pas adaptés à une mise en oeuvre d'applications de paiement.

Ainsi, l'invention propose la mise en oeuvre d'une couche de liaison qui permet de prendre en charge la transmission de données entre le terminal de paiement et le terminal de communication. Cette couche de liaison permet de gérer le flux de données (sous la forme de trames TLV) qui est transmis entre les terminaux.

On présente, en relation avec la figure 2, un diagramme de bloc décrivant les couches logicielles mises en oeuvre au sein d'un terminal de paiement selon un mode de réalisation.

Les couches logicielles comprennent une couche dite « bas niveau » comprenant des modules logiciels interagissant directement avec les composants matériels du terminal. Cette couche « bas niveau » permet de piloter les dispositifs matériels du terminal de paiement et comprend des pilotes (« drivers » en Anglais). Cette couche logicielle « bas niveau » est utilisée par l'intermédiaire d'un système d'exploitation (« OS : Operating System» en anglais). Le système d'exploitation comprend notamment des bibliothèques (« libraries » en Anglais). Le système d'exploitation est lui-même utilisé par un gestionnaire applicatif (« Manager ») qui contrôle les différentes applications du terminal de paiement. Parmi les applications possibles, on peut citer les applications de paiement (simple, différé, en plusieurs fois), la gestion de cartes de fidélité, le porte monnaie électronique, etc.

### 1.2 Description d'un mode de réalisation

Pour permettre la transmission de données par l'intermédiaire d'une liaison de type « série », non adaptée à cet usage dans la cadre d'une liaison entre un terminal de paiement et un terminal de communication de type iPod™ ou iPhone™, l'invention propose, dans ce mode de réalisation, de mettre en oeuvre un multiplexage des messages.

Plus particulièrement, dans la mesure ou l'objectif est de pouvoir réutiliser un terminal de paiement existant pour s'appairer avec un terminal de communication (iPod™ ou iPhone™), sans qu'il soit nécessaire de certifier (au sens des certifications PCI/PED) l'ensemble constitué du terminal de communication et du terminal de paiement, les inventeurs apportent une solution simple, qu'il est possible de mettre à jour. Pour ce faire, les inventeurs ont mis en oeuvre un dispositif de multiplexage qui joue le rôle d'interface entre le terminal de paiement et l'iPhone™ ou l'iPod™.

Plus particulièrement, dans un mode de réalisation cette interface est un module d'interface, logiciel ou matériel, qui permet d'une part de transmettre et de recevoir des messages vers le terminal mobile. Selon un premier mode de réalisation particulier, le dispositif de multiplexage est mis en oeuvre au sein du terminal de paiement. De ce fait, il bénéficie des mesures de sécurité mises en oeuvre au sein du terminal de paiement (mesures qui sont prises pour permettre la certification PCI-PED). Selon un deuxième mode de réalisation particulier le dispositif de multiplexage d'interface est mis en oeuvre au sein d'une une carte électronique de connexion entre le terminal de paiement et le terminal mobile. Dans ce deuxième mode de réalisation la carte électronique de connexion comprend un circuit imprimé sur lequel sont fixés :
- un premier connecteur, permettant de connecter la carte au dispositif de paiement,
- un deuxième connecteur, permettant de connecter la carte au terminal de communication, et
- un troisième connecteur, permettant de connecter la carte à un dispositif externe (par exemple un chargeur).

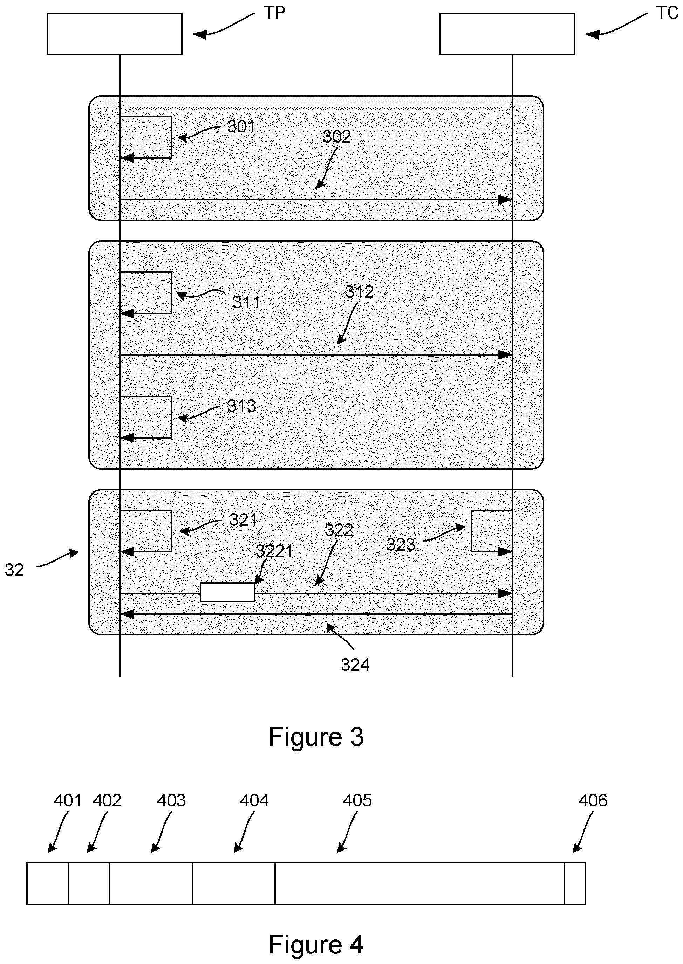

Selon l'invention, le dispositif de multiplexage d'interface est configuré pour mettre en oeuvre un procédé de multiplexage de messages entre le terminal de paiement et le terminal mobile. Ce procédé de multiplexage, présenté en relation avec la figure 3, comprend, du point de vue du terminal de paiement, les étapes suivantes :
- une étape d'initialisation (311) d'une interface de communication externe avec ledit terminal de communication ;
- une première étape de transmission (312), audit terminal de communication, d'une requête de création de canaux virtuels distants, par l'intermédiaire de ladite interface de communication externe ;
- une étape de création (313), au sein dudit terminal de paiement, des canaux virtuels locaux correspondant auxdits canaux virtuels distants ;
- une deuxième étape de transmission (32) de trames de données associées auxdits canaux virtuels locaux par l'intermédiaire de ladite interface de communication externe.

Ainsi, le terminal de paiement est à même de transmettre des données au terminal de communication par l'intermédiaire de canaux virtuel.

La liste des canaux virtuels est la suivante :
- un canal virtuel « transaction » destiné à émettre et recevoir les données relatives aux transactions bancaires ;
- un canal virtuel « configuration » destiné à permettre l'échange d'informations de service (synchronisation, mise à l'heure, etc.) ;
- un canal « SSL », du nom du protocole éponyme, destiné à sécuriser la transmission de données entre le terminal de paiement et le terminal de communication ;
- un canal « Printer » destiné à transmettre des données dite d'impression, telles que des données résultant d'une transaction (communément appelées « ticket carte ») ;
- un canal virtuel « Barrcode » destiné à permettre la gestion de la lecture des codes à barre lorsque le terminal de paiement dispose d'un lecteur de code à barre.

Préalablement à l'initialisation de l'interface de communication externe avec le terminal de communication, la méthode de l'invention comprend en outre une première étape d'authentification (30) dudit terminal de paiement vis-à-vis dudit terminal de communication. Cette étape permet d'assurer que le terminal de paiement est autorisé à être couplé avec le terminal de communication.

Cette première étape d'authentification (30) comprend, du point de vue du terminal de paiement, une étape d'obtention (301) d'un certificat (par exemple auprès d'un processeur dédié situé au sein du terminal de paiement) et une étape de vérification (302), de type « challenge/réponse », dans laquelle le terminal de communication vérifie l'autorisation du terminal de paiement à être appairé. Le processeur dédié à cet effet qui est installé au sein du terminal de paiement peut être un processeur fourni par le fabricant du terminal de communication (e.g. Apple™).

Cette première étape d'authentification peut avantageusement être suivie, dans un mode de réalisation spécifique de l'invention non représenté, d'une deuxième étape d'authentification dans laquelle la charge de la preuve ne sera pas du côté du terminal de paiement mais du côté du terminal de communication. Cette deuxième étape aura ainsi pour objectif d'assurer que le terminal de communication a bien le droit d'être appairé avec le terminal de paiement auquel il est appairé. Cette étape d'authentification peut également être du type « challenge/réponse » ou de tout autre type convenable. Cette deuxième étape d'authentification peut avantageusement utiliser du matériel cryptographique qui est compris dans la carte SIM du terminal de communication. Ainsi, cette utilisation, à des fin de mutuelle authentification, évite de devoir placer des données sensibles dans le terminal de communication (qui n'est pas prévu pour cela), et évite de développer une solution coûteuse pour le faire.

Selon un mode de réalisation de l'invention, postérieurement à l'étape de création (313), au sein dudit terminal de paiement, des canaux virtuels correspondants auxdits canaux virtuels créés par le terminal de communication, le procédé de multiplexage comprend une étape de vérification (321), au sein desdits canaux virtuels, d'une présence d'une trame TLV destiné au terminal de communication et lorsque l'un des canaux comprend une telle trame, une étape d'encapsulation (322) de cette trame TLV dans un message *iAP* (3221).

Selon un mode de réalisation particulier de l'invention, le format du message *iAP* transmis (3221), présenté en relation avec la figure 4, est le suivant :
- un identifiant de « lingo » (401) d'une longueur de 1 octet ;
- un identifiant de trame (402) d'une longueur de 1 octet ;
- un identifiant de transaction (403) d'une longueur de 2 octets ;
- un identifiant de session (correspondant au numéro de canal virtuel (404)) d'une longueur de 2 octets ;
- des données à longueur variable TLV (405) ;
- un code de contrôle d'intégrité CRC (406).

Ainsi, on minimise grandement les données d'encapsulation et on transmet donc plus de données utiles dans un canal physique restreint.

Selon un mode de réalisation de l'invention, le procédé de multiplexage comprend également, du côté du terminal de communication, une étape de vérification (323), au sein de canaux virtuels du terminal de communication, d'une présence d'une trame TLV destiné au terminal de paiement et lorsque l'un des canaux comprend une telle trame, une étape d'encapsulation (324) de cette trame TLV dans un message *iAP.*

Ainsi, on utilise l'interface de communication de manière bidirectionnelle.

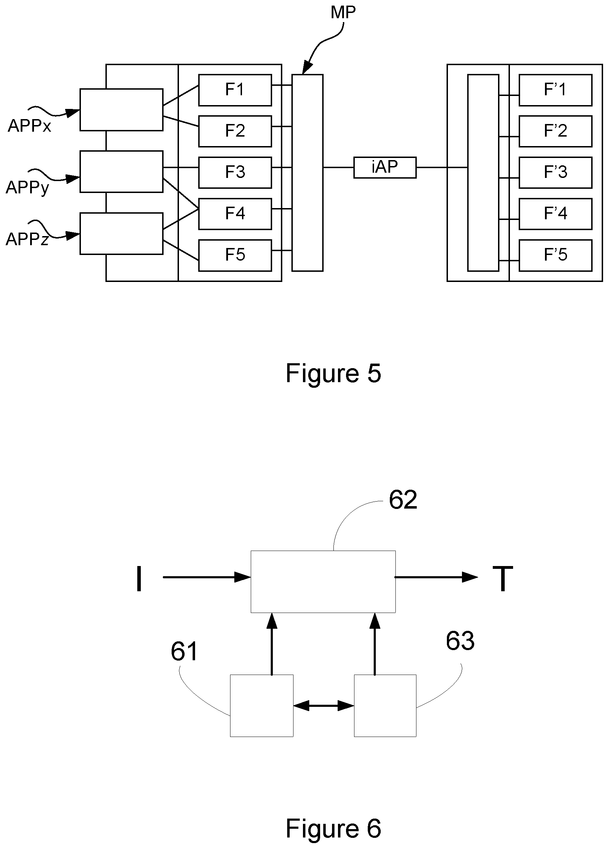

Plus particulièrement, les canaux virtuels sont, dans un mode de réalisation particulier, décrit en relation avec la figure 5, créés sous la forme d'une pluralité de file d'attente de type « FIFO » (F1 à F5 du côté du terminal de paiement et F'1 à F'5 du côté du terminal de communication). Le fonctionnement de ces files d'attente est le suivant.

Les files d'attente sont invisibles, du point de vue des applications (APPx, APPy, APPz) du terminal de paiement. C'est ce qui permet de ne pas modifier ces applications qui ont déjà été agréées. En effet, les applications du terminal de paiement utilisent des canaux de transmission de données. Ainsi, pour les applications du terminal de paiement, le fonctionnement est identique au fonctionnement antérieur : les applications utilisent les canaux dont elles ont besoin pour s'exécuter.

La différence réside dans la « matérialisation » du canal. En effet, là où le canal était une réelle voie de transmission de données entre deux équipements, l'invention matérialise le canal sous la forme d'une file d'attente de type FIFO. Il y a donc par exemple cinq files d'attente (soit autant que de canaux virtuels) dans lesquelles les trames TLV sont insérées (par les applications du terminal de paiement) ou obtenues (en provenance du terminal de communication). Les files d'attentes sont gérées par le dispositif de multiplexage (MP). Celui-ci se charge de vérifier le contenu des files d'attente (F1 à F5) et d'encapsuler les trames TLV sous la forme de messages préalablement décrits en relation avec la figure 4 et transmettre ces messages au terminal de communication. Inversement, il reçoit les messages *iAP* en provenance du terminal de communication et identifie la file d'attente (F1 à F5) dans laquelle la trame TLV contenue dans ce message doit être insérée. Il décapsule le message *iAP* (c'est-à-dire qu'il enlève les informations d'entête TLV) et, à l'aide du numéro de canal virtuel contenu dans le message, place la trame TLV dans la file d'attente. L'application à laquelle cette trame TLV est destinée la récupère pour traitement et la trame TLV est effacée de la file d'attente par le dispositif de multiplexage. Le dispositif de multiplexage peut être mis en oeuvre sous la forme d'un composant matériel ou d'un composant logiciel.

### 1.3 Autres caractéristiques optionnelles et avantages

On présente, en relation avec la figure 6, un mode de réalisation d'un dispositif de multiplexage de message selon l'invention.

Par exemple, la dispositif de multiplexage comprend une mémoire 61 constituée d'une mémoire tampon, une unité de traitement 62, équipée par exemple d'un microprocesseur et de mémoire vive, et pilotée par le programme d'ordinateur 63, mettant en oeuvre un procédé de multiplexage selon l'invention.

A l'initialisation, les instructions de code du programme d'ordinateur 63 sont par exemple chargées dans une mémoire avant d'être exécutées par le processeur de l'unité de traitement 62.

L'unité de traitement 62 reçoit en entrée une trame TLV émise par une application du terminal de paiement. Cette trame TLV est originellement destinée à être transmise par un canal de communication. Le dispositif intercepte cette trame TLV et la stocke dans une file d'attente correspondant au canal virtuel qui émule le canal de communication.

L'unité de traitement 62 réalise en parallèle une encapsulation, sous la forme d'un message *iAP,* de la trame TLV qu vient d'être insérée dans la file d'attente et réalise la transmission de ce message *iAP* au terminal de communication. Selon un mode de réalisation de l'invention, cette transmission est mise en oeuvre par l'intermédiaire de la lingo « générique » du protocole *iAP.*

Le microprocesseur de l'unité de traitement 62 met en oeuvre les étapes du procédé de multiplexage pour permettre la transmission des messages *iAP,* selon les instructions du programme d'ordinateur 63.

Pour cela, la dispositif de multiplexage comprend, outre la mémoire tampon 61 des moyens de initialisation d'une interface de communication externe avec ledit terminal de communication, des moyens de transmission, audit terminal de communication, d'une requête de création de canaux virtuels distants, par l'intermédiaire de ladite interface de communication externe, des moyens de création, au sein dudit terminal de paiement, des canaux virtuels locaux correspondant auxdits canaux virtuels distants, des moyens de transmission de trames de données associées auxdits canaux virtuels locaux par l'intermédiaire de ladite interface de communication externe. Ces moyens sont pilotés par le microprocesseur de l'unité de traitement 62.

## Revendications

1. Procédé de multiplexage de messages échangés entre un terminal de paiement et un terminal de communication par l'intermédiaire d'une connexion entre ledit terminal de paiement et ledit terminal de communication utilisant le protocole *iAP*, , iPod Accessory Protocol, ledit procédé comprenant :
- une étape d'initialisation (311) d'une interface de communication externe avec ledit terminal de communication ;
- une première étape de transmission (312), par ledit terminal de paiement, audit terminal de communication, d'une requête de création de canaux virtuels distants, par l'intermédiaire de ladite interface de communication externe ;
- une étape de création (313), au sein dudit terminal de paiement, des canaux virtuels locaux correspondant auxdits canaux virtuels distants ;
- une deuxième étape de transmission (32) de trames de données associées auxdits canaux virtuels locaux par l'intermédiaire de ladite interface de communication externe, ledit procédé dans lequel un canal virtuel est créé sous la forme d'une file d'attente, ladite file d'attente étant configurée pour permettre la réception, l'enregistrement et l'effacement de trames TLV , Type-Length-Value, destinées audit canal virtuel.

2. Procédé selon la revendication 1, **caractérisé en ce que** ladite interface de communication externe est une interface RS232.

3. Procédé selon la revendication 1, **caractérisé en ce qu'**il comprend en outre, préalablement à ladite étape d'initialisation (311) d'interface de communication comprend une étape d'authentification (30) dudit terminal de paiement vis-à-vis dudit terminal de communication comprenant :
- une étape d'obtention (301) d'un certificat d'authentification ; et
- une étape de vérification (302), de l'autorisation du terminal de paiement à être appairé avec ledit terminal de communication à l'aide dudit certificat d'authentification.

4. Procédé selon la revendication 1, **caractérisé en ce que** ladite deuxième étape de transmission (32) de trames de données associées auxdits canaux virtuels locaux comprend :
- une étape de vérification (321), au sein desdits canaux virtuels, d'une présence d'une trame TLV destiné au terminal de communication ;
et lorsque l'un des canaux comprend une telle trame :
- une étape d'encapsulation (322) de cette trame TLV dans un message iAP (3221).

5. Procédé selon la revendication 1, **caractérisé en ce que** lesdits canaux virtuels appartiennent au groupe comprenant :
- un canal virtuel « transaction » d'échange de données relatives aux transactions bancaires ;
- un canal virtuel « configuration » d'échange d'informations de service ;
- un canal virtuel « SSL », de chiffrement de transmission de données entre ledit terminal de paiement et ledit terminal de communication ;
- un canal virtuel « Printer » de transmission de données d'impression ;
- un canal virtuel « Barrcode » de gestion de la lecture des codes à barre.

6. Dispositif de multiplexage de messages échangés entre un terminal de paiement et un terminal de communication par l'intermédiaire d'une connexion entre ledit terminal de paiement et ledit terminal de communication utilisant le protocole *iAP* , iPod Accessory Protocol, , ledit dispositif comprenant :
- des moyens d'initialisation (311) d'une interface de communication externe avec ledit terminal de communication ;
- des premiers moyens de transmission (312), par ledit terminal de paiement, audit terminal de communication, d'une requête de création de canaux virtuels distants, par l'intermédiaire de ladite interface de communication externe ;
- des moyens de création (313), au sein dudit terminal de paiement, des canaux virtuels locaux correspondant auxdits canaux virtuels distants ;
- des deuxièmes moyens de transmission (32) de trames de données associées auxdits canaux virtuels locaux par l'intermédiaire de ladite interface de communication externe, le dispositif étant configuré pour créer un canal virtuel sous la forme d'une file d'attente, ladite file d'attente étant configurée pour permettre la réception, l'enregistrement et l'effacement de trames TLV , Type-Length-Value, destinées audit canal virtuel.

7. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de production selon l'une au moins des revendications 1 à 5, lorsqu'il est exécuté sur un ordinateur.

## Patentansprüche

1. Verfahren zum Multiplexing von Nachrichten, die zwischen einem Zahlungsendgerät und einem Kommunikationsendgerät über eine Verbindung zwischen dem Zahlungsendgerät und dem Kommunikationsendgerät unter Verwendung des iAP Protokolls, iPod Accessory Protocol, ausgetauscht werden,
wobei das Verfahren Folgendes aufweist:
- einen Schritt des Initialisierens (311) einer externen Kommunikationsschnittstelle mit dem Kommunikationsendgerät;
- einen ersten Schritt des Übertragens (312) durch das Zahlungsendgerät an das Kommunikationsendgerät einer Anfrage zum Erzeugen von virtuellen Remote-Kanälen über die externe Kommunikationsschnittstelle;
- einen Schritt des Erzeugens (313) in dem Zahlungsendgerät der lokalen virtuellen Kanäle, die den virtuellen Remote-Kanälen entsprechen;
- einen zweiten Schritt des Übertragens (32) von Datenrahmen, die mit den lokalen virtuellen Kanälen verbunden werden, über die externe Kommunikationsschnittstelle;
das Verfahren, wobei ein virtueller Kanal in Form von einer Warteschlange erzeugt wird, wobei die Warteschlange konfiguriert wird, um das Empfangen, das Aufzeichnen und das Löschen von TLV Rahmen, Type-Length-Value Rahmen, die für den virtuellen Kanal bestimmt sind, zu ermöglichen.

2. Verfahren nach Anspruch 1, **dadurch gekennzeichnet, dass** die externe Kommunikationsschnittstelle eine RS232-Schnittstelle ist.

3. Verfahren nach Anspruch 1, **dadurch gekennzeichnet, dass** es ferner vor dem Schritt des Initialisierens (311) der Kommunikationsschnittstelle einen Schritt der Authentifizierung (30) des Zahlungsendgerätes gegenüber dem Kommunikationsendgerät aufweist, umfassend:
- einen Schritt des Erhaltens (301) eines Authentifizierungszertifikats und
- einen Schritt des Überprüfens (302) mittels des Authentifizierungszertifikats der Genehmigung des Zahlungsendgerätes, mit dem Kommunikationsendgerät gepaart zu werden.

4. Verfahren nach Anspruch 1, **dadurch gekennzeichnet, dass** der zweite Schritt des Übertragens (32) von von Datenrahmen, die mit den lokalen virtuellen Kanälen verbunden werden, Folgendes aufweist:
- einen Schritt des Überprüfens (321) in den virtuellen Kanälen einer Anwesenheit eines Rahmens, der für das Kommunikationsendgerät bestimmt ist;
und, wenn einer der Kanäle einen derartigen Rahmen aufweist:
- einen Schritt des Einkapselns (322) dieses TLV Rahmens in einer iAP Nachricht (3221).

5. Verfahren nach Anspruch 1, **dadurch gekennzeichnet, dass** die virtuellen Kanäle der Gruppe angehören, die Folgendes aufweist:
- einen virtuellen "Transaktions"-Kanal des Austauschens von Daten in Bezug auf die Banktransaktionen;
- einen virtuellen "Konfigurations"-Kanal des Austauschens von Service-Informationen;
- einen virtuellen Kanal der "SSL-Verschlüsselung" der Datenübertragung zwischen dem Zahlungsendgerät und dem Kommunikationsendgerät;
- einen virtuellen "Printer"-Kanal der Übertragung von Druckdaten;
- einen virtuellen "Barcode"-Kanal der Verwaltung des Barcodelesens.

6. Vorrichtung zum Multiplexing von Nachrichten, die zwischen einem Zahlungsendgerät und einem Kommunikationsendgerät über eine Verbindung zwischen dem Zahlungsendgerät und dem Kommunikationsendgerät unter Verwendung des iAP Protokolls, iPod Accessory Protocol, ausgetauscht werden,
wobei die Vorrichtung Folgendes aufweist:
- Mittel zum Initialisieren (311) einer externen Kommunikationsschnittstelle mit dem Kommunikationsendgerät;
- erste Mittel zum Übertragen (312) durch das Zahlungsendgerät an das Kommunikationsendgerät einer Anfrage zum Erzeugen von virtuellen Remote-Kanälen über die externe Kommunikationsschnittstelle;
- Mittel zum Erzeugen (313) in dem Zahlungsendgerät der lokalen virtuellen Kanäle, die den virtuellen Remote-Kanälen entsprechen;
- zweite Mittel zum Übertragen (32) von Datenrahmen, die mit den lokalen virtuellen Kanälen verbunden sind, über die externe Kommunikationsschnittstelle;
wobei die Vorrichtung konfiguriert ist, um einen virtuellen Kanal in Form von einer Warteschlange zu erzeugen, wobei die Warteschlange konfiguriert ist, um das Empfangen, das Aufzeichnen und das Löschen von TLV Rahmen, Type-Length-Value Rahmen, die für den virtuellen Kanal bestimmt sind, zu ermöglichen.

7. Computerprogrammprodukt, das von einem Kommunikationsnetz heruntergeladen werden kann und/oder auf einem computerlesbaren Medium gespeichert werden kann und/oder von einem Mikroprozessor ausgeführt werden kann, **dadurch gekennzeichnet, dass** es Programmcodebefehle für die Ausführung des Verfahrens nach mindestens einem der Ansprüche 1 bis 5 aufweist, wenn es auf einem Computer ausgeführt wird.

## Claims

1. Method for multiplexing messages exchanged between a payment terminal and a communications terminal through a connection between said payment terminal and said communications terminal using the *i*AP, iPod Accessory Protocol, said method comprising:
- a step of initialisation (311) of an external communications interface with said communications terminal;
- a first step of transmission (312), by said payment terminal, to said communications terminal, of a request for creating remote virtual channels, through said external communications interface;
- a step of creating (313), within said payment terminal, local virtual channels corresponding to said remote virtual channels;
- a second step of transmission (32) of associated data frames to said local virtual channels through said external communications interface,
wherein a virtual channel is created in the form of a queue, said queue being configured to enable the reception, recording and erasure of TLV, Type-Length-Value frames, intended for said virtual channel.

2. Method according to Claim 1, **characterised in that** said external communications interface is an RS232 interface.

3. Method according to Claim 1, **characterised in that** it further comprises, prior to said step of initialisation (311) of a communications interface, a step of authenticating (30) said payment terminal in relation to said communications terminal comprising:
- a step of obtaining (301) an authentication certificate; and
- a step of verification (302), of the authorisation of the payment terminal to be paired with said communications terminal using said authentication certificate.

4. Method according to Claim 1, **characterised in that** the said second step of transmission (32) of associated data frames to said local virtual channels comprises:
- a step of verification (321), within said virtual channels, of the presence of a TLV frame intended for the communications terminal;
and when one of the channels comprises such a frame:
- a step of encapsulating (322) this TLV frame in an iAP message (3221).

5. Method according to Claim 1, **characterised in that** said virtual channels belong to the group comprising:
- a virtual "transaction" channel for exchanging data relating to banking transactions;
- a virtual "configuration" channel for exchanging service information;
- a virtual "SSL" channel for encrypting data transmission between said payment terminal and said communications terminal;
- a virtual "Printer" channel for transmission of printing data;
- a virtual "Barcode" channel for managing the reading of barcodes.

6. Device for multiplexing messages exchanged between a payment terminal and a communications terminal through a connection between said payment terminal and said communications terminal using the *iAP,* iPod Accessory Protocol, wherein the device comprises:
- means for initialising (311) an external communications interface with said communications terminal;
- first means for transmitting (312), by said payment terminal to said communications terminal, a request for creating remote virtual channels, through said external communications interface;
- means for creating (313), within said payment terminal, local virtual channels corresponding to said remote virtual channels;
- second means for transmitting (32) associated data frames to said local virtual channels through said external communications interface, the device being configured to create a virtual channel in the form of a queue, said queue being configured to enable the reception, recording and erasure of TLV, Type-Length-Value frames, intended for said virtual channel.

7. Computer program product downloadable from a communications network and/or stored on a computer- readable support and/or executable by a microprocessor, **characterised in that** it comprises program code instructions for the execution of the method according to at least one of claims 1 to 5, when it is executed on a computer.
